# EUROPÄISCHE PATENTSCHRIFT

(11) **EP 0 680 732 B1**
(45) Veröffentlichungstag und Bekanntmachung des Hinweises auf die Patenterteilung: **02.06.1999**
(21) Anmeldenummer: 95106144.9
(22) Anmeldetag: 25.04.1995
(51) Int. Cl.: A61C 9/00

(54) **Abformkappe für Dentalimplantate**
Impression cap for dental implants
Coupelle de prises d'empreintes pour implants dentaires

(30) Priorität: 04.05.1994 DE 4415670
(43) Veröffentlichungstag der Anmeldung: 08.11.1995
(73) Patentinhaber: DEGUSSA AKTIENGESELLSCHAFT, 60311 Frankfurt (DE)
(72) Erfinder: Meiers, Willi, D-63755 Alzenau (DE); Lange, Thomas, D-63505 Langenselbold (DE); Groll, Werner, Dr., D-63755 Alzenau (DE)

(56) Entgegenhaltungen:
- DE-A- 1 566 219
- DE-C- 831 865
- US-A- 3 602 993

## Beschreibung

Die Erfindung betrifft eine Abformkappe für Dentalimplantate mit einer konisch ausgebildeten, zum Implantat sich öffnende Innenfläche, die in Form und Größe dem Aufbauteil des Implantats angepasst ist.

In letzter Zeit werden zunehmend Kieferimplantate eingesetzt, die an der Stelle fehlender natürlicher Zähne in den Kieferknochen eingebracht (implantiert) werden, so daß an ihnen ein Zahnersatz befestigt werden kann. Diese Implantate bestehen meist aus zwei Teilen, einem in den Kieferknochen einzuschraubenden Schraubenkörper und einem in den Schraubenkörper einschraubbaren Aufbauteil, der an dem dem Schraubkörper entgegengesetzten Ende meist konisch ausgebildet ist. An diesem konischen Teil wird der Zahnersatz befestigt. Solche Implantate sind beispielsweise in der DE-PS 40 35 172 beschrieben.

Für die Versorgung von Patienten mit künsltichem Zahnersatz werden in der Regel präfabrizierte Aufbauteile verwendet, die in den Schraubenkörper eingeschraubt werden. Diese Aufbauteile dienen als Basis für die Herstellung von festsitzenden, bedingt herausnehmbaren oder herausnehmbaren Zahnersatz. Im Gegensatz zur Anformung von beschliffenen Zähnen kann in diesem Fall mit konfektionierten Teilen die Mundsituation auf ein zahntechnisches Modell übertragen werden. Hierzu verwendet man sogenannte Abformkappen, die auf das Aufbauteil gesetzt werden und nach Abdrucknahme im Abdruckmaterial (z.B. Silikon, Polyäther) verbleiben. Der Zahntechniker gibt dann in die Abformkappe das Laboranalog des Aufbauteils und stellt das Meistermodell her.

Zur Herstellung des Abdrucks werden verschiedenste Abformkappen verwendet. So findet man Abdruckkappen, die ohne weitere Befestigung auf das Implantataufbauteil aufgesetzt werden. Nachteil dieser Technik ist, daß aufgrund des lockeren Sitzes der Abformkappe auf dem Aufbauteil bei der Abformung oder auch bei der anschließenden Modellherstellung Ungenauigkeiten durch Rotation oder Verschiebung der Abformkappe bzw. der Laboranaloge entstehen können.

Eine weitaus präzisere Art der Abformung besteht darin, daß ein individueller Löffel hergestellt wird, der oberhalb der Implantate perforiert wird. Durch diese Perforation kann dann mittels einer Befestigungsschraube die Abformkappe auf dem Aufbauteil befestigt werden. Nach Aushärtung der Abformmasse wird die in den Mundraum durch die Perforation des Abdrucklöffels stehende Schraube gelöst und der Abdruck kann abgenommen werden. Zur Herstellung des Meistermodells wird dann das Labor analog entsprechend der oben angegebenen Vorgehensweise in die Abdruckkappe, die sich in der Abdruckmasse befindet, gegeben und wiederum durch die Perforation des individuellen Abdrucklöffels verschraubt. Danach erfolgt die Herstellung des Gipsmodells. Ein wesentlicher Nachteil dieser Verfahren ist, daß der Aufwand zur Erreichung einer präzisen Abformung sehr hoch ist, da zunächst ein individueller Löffel hergestellt werden muß und zusätzlich die Verschraubung im Mund insbesondere bei schlecht zugänglichen Stellen aufwendig und problematisch sein kann.

Es war daher Aufgabe der vorliegenden Erfindung, eine Abformkappe für Dentalimplantate zu konstruieren, mit einer konisch ausgebildeten, zum Implantat sich öffnenden Innenfläche, die in Form und Größe dem Aufbauteil des Implantats angepasst ist und die ohne großen Aufwand eine präzise Abformung im Mundraum gestattet.

Diese Aufgabe wird erfindungsgemäß dadurch gelöst, daß die Abformkappe am offenen Ende eine oder mehrere federnde Laschen trägt, die im aufgesteckten Zustand über die Schulter des konischen Bereichs des Aufbauteils greifen.

Vorteilhafterweise ist die Abformkappe zusätzlich mit einer oder mehreren Sieken versehen. Diese Sieken können gegebenenfalls in entsprechende, in den Aufbauteil eingelassene Ausnehmungen eingreifen.

Die Abformkappe wird auf dem Aufbauteil über die federnde Laschen und gegebenenfalls über Sieken fixiert. Diese Fixierung erlaubt eine präzise Abformung der Mundsituation, ohne daß während der Bearbeitung (Abformung, Modellherstellung) eine Verdrehung oder vertikale Verschiebung der Abformkappe aus der richtigen Position erfolgen kann.

Die Abbildungen I und II zeigen schematisch eine beispielhafte Ausführungsform einer Abformkappe im Längs- und Querschnitt. Die zylindrische Abformkappe (1) ist zumindest im unteren Teil (2) konisch ausgebildet, wobei die Form und die Größe des konischen Hohlraums (3) der Abformkappe (1) der Form und der Größe des (hier nicht gezeichneten) konischen Bereichs des Aufbauteils des Dentalimplantats entspricht. Diese Abformkappe (1) ist am offenen Ende mit einer oder mehreren federnden Laschen (4) versehen, die im aufgesteckten Zustand über die Schulter des konischen Bereichs des Aufbauteils greifen und so eine vertikale Verschiebung und zum Teil auch eine Verdrehung der Abformkappe (1) auf dem Aufbauteil zuverlässig verhindern. Zusätzlich kann die Abformkappe (1) noch mit Sieken (5) ausgestattet sein, die einen zusätzlichen Schutz gegen ein Verdrehen ermöglichen. Das Ablösen der Abformkappe von dem Aufbauteil ist durch eine vertikale Ziehkraft leicht durchführbar.

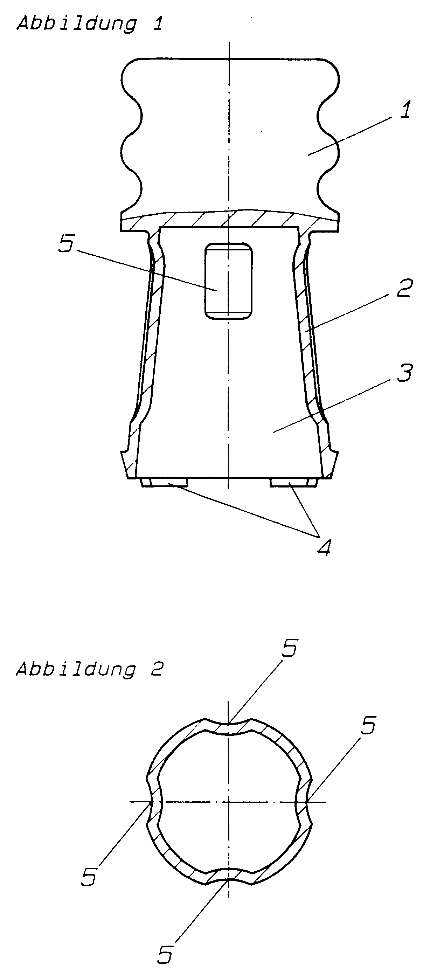

## Patentansprüche

1. Abformkappe für Dentalimplantate, mit einer konisch ausgebildeten, zum Implantat sich öffnenden Innenfläche, die in Form und Größe dem Aufbauteil des Implantats angepasst ist,
**dadurch gekennzeichnet**,
daß die Abformkappe (1) am offenen Ende eine oder mehrere federnde Laschen (4) trägt, die im aufgesteckten Zustand über die Schulter des konischen Bereichs des Aufbauteils greifen.

2. Abformkappe nach Anspruch 1,
**dadurch gekennzeichnet**,
daß sie mit einer oder mehreren Sieken (5) versehen ist.

## Claims

1. A moulding cap for dental implants, with a conically constructed inner surface, which is open towards the implant and matches the mounting element of the implant in shape and size,
characterised in that,
at its open end, the moulding cap (1) supports one or more resilient tongues (4), which in the fitted state engage over the shoulder of the conical region of the mounting element.

2. A moulding cap according to claim 1,
characterised in that
it is provided with one or more creases (5).

## Revendications

1. Coupelle de poses d'empreintes pour implants dentaires, de forme conique comprenant une surface interne s'ouvrant du côté de l'implant, adapté à la forme et la taille du Pilier de l'implant,
caractérisée en ce que
la coupelle (1) est munie d'une ou plusieurs attaches élastiques (4) à son côté ouvert qui, montées, viennent sur l'épaulement de la partie conique du pilier.

2. Coupelle selon la revendication 1,
caractérisée en ce qu'
elle est munie d'un ou plusieurs sillons (5).
